# EUROPEAN PATENT APPLICATION

(11) **EP 2 086 272 A1**
(43) Date of publication of application: **05.08.2009**
(21) Application number: 09001423.4
(22) Date of filing: 02.02.2009
(51) Int. Cl.: H04W 72/02

(54) **Mobile communication system and method for transmitting PDCP status report thereof**

(30) Priority: 01.02.2008 US 25311 P; 30.01.2009 KR 20090007574
(71) Applicant: LG Electronics Inc., Seoul 150-010 (KR)
(72) Inventor: Yi, Seung-June, Gyeonggi-Do (KR); Park, Sung-Jun, Gyeonggi-Do (KR); Lee, Young-Dae, Gyeonggi-Do (KR); Chun, Sung-Duck, Gyeonggi-Do (KR)
(74) Representative: Katérle, Axel

(57) **Abstract**

A mobile communication system, and method for transmitting a PDCP status report thereof capable of preventing the occurrence of data loss when reestablishing an RLC. When an RLC re-establishment occurs due to an RLC internal error, a receiving PDCP entity triggers a status report to transmit it to a transmitting PDCP entity even if PDCP entities are not replaced by others. The transmitting PDCP entity checks whether a received state of each PDCP SDU based on the triggered PDCP status report, and then re-transmits PDCP SDUs having not successfully received by the receiving PDCP entity.

## Description

The present application claims the priority benefits of U.S. Provisional Application No. 61/025,311 filed on February 1, 2008 and Korean Patent Application No. 10-2009-0007574 filed on January 30, 2009 in Republic of Korea. The entire contents of these applications are herein fully incorporated by reference.

### [Technical Field]

The present invention relates to a long term evolution (LTE) system, and more particularly, to a mobile communication system for transmitting a packet data convergence protocol (PDCP) status report when re-establishing a radio link control (RLC), and a method for transmitting a PDCP status report thereof.

### [Background Art]

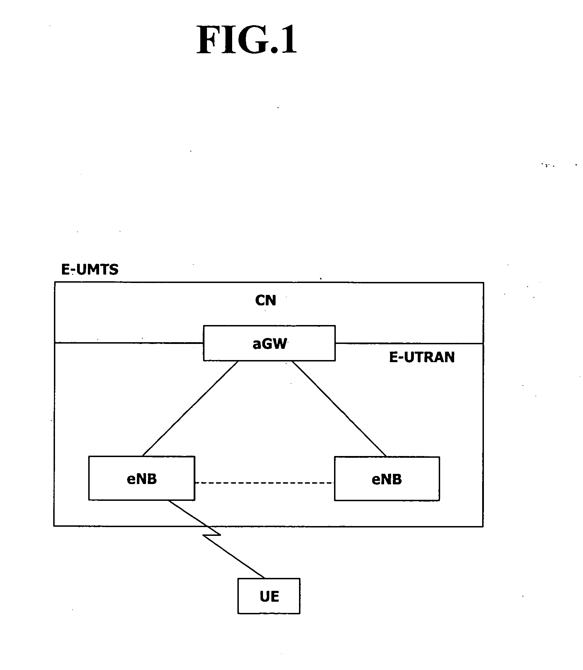

FIG. 1 illustrates an exemplary network structure of an Evolved Universal Telecommunications System (E-UMTS). The E-UMTS developed from an existing Universal Telecommunications System (UMTS). Standardization of the E-UMTS is currently being developed by a Third Generation Partnership Project (3GPP). The E-UMTS may also be called a Long Term Evolution (LTE) system.

An LTE network may consist of an Evolved UMTS terrestrial radio access network (E-UTRAN) and a core network (CN). The E-UTRAN includes a User Equipment (UE), an Evolved NodeB (eNB), and an Access Gateway (aGW) positioned at the end of a network and connected to an external network.

The aGW may be divided into a first portion for processing user traffic and a second portion for processing control traffic. The aGW portion for processing the user traffic and the aWG portion for processing the control traffic can be connected to each other via a communication interface.

One or more cells may exist in one eNode B. A plurality of eNode Bs are connected by an interface for transmitting the user traffic and/or control traffic. The CN may include an aGW, a node adapted for user registration of a user equipment (UE). An interface may also be used in the UMTS to divide the E-UTRAN and the CN.

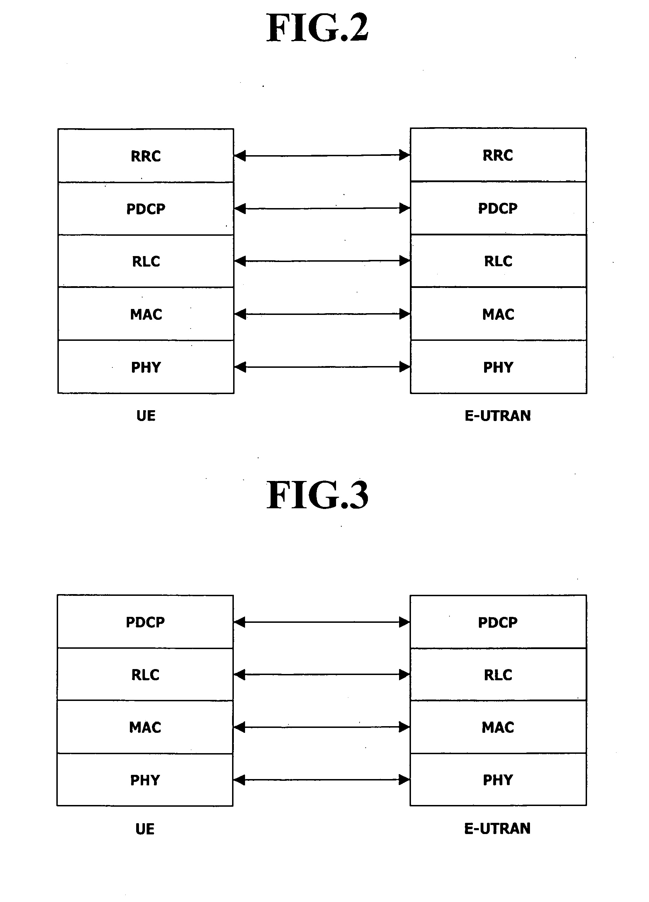

FIGS. 2 and 3 illustrate architectures for radio interface protocols between a mobile terminal and an E-UTRAN based on a 3GPP radio access network specification.

The radio interface protocols are horizontally formed of a physical layer, a data link layer, and a network layer. Vertically, the radio interface protocols are formed of a user plane (U-plane) for transmitting data information, and a control plane (C-plane) for transmitting control signals. The protocol layers shown in FIGS. 2 and 3 may be divided into a first layer (L1), a second layer (L2), and a third layer (L3) based on three lower layers of a well-known interconnection scheme, such as an Open System Interconnection (OSI) reference model.

The radio protocol layers are implemented in pairs between a mobile terminal and an E-UTRAN for data transfer in a radio interval.

Hereinafter, radio protocol layers of the control plane illustrated in FIG. 2 and the user plane illustrated in FIG. 3 will be explained. As stated above, a physical layer provides an information transfer service to an upper layer. The physical layer is connected to an upper layer, such as a medium access control (MAC) layer, via a transport channel. Data is transferred between the MAC layer and the physical layer via the transport channel. Here, the transport channel is classified into a dedicated transport channel and a common channel according to a channel sharing state. Data is also transferred between different physical layers, such as a physical layer of a transmitting side and a physical layer of a receiving side, by using a physical channel using radio resources.

The second layer includes a plurality of layers. A medium access control (MAC) layer serves to map a plurality of logical channels with a plurality of transport channels. And, the second layer performs a logical channel multiplexing function to map a plurality of logical channels with one transport channel. The MAC layer is connected to an upper layer, the RLC layer through a logical channel. The logical channel is largely classified into a control channel for transmitting control plane information, and a traffic channel for transmitting user plane information depending on types of transmitted information.

The radio link control (RLC) layer of the second layer segments and concatenates data received from an upper layer, thereby controlling a data size so as to be suitable for a lower layer to transmit data to a radio interval.

The RLC provides three modes, namely, a transparent mode (TM), an unacknowledged mode (UM) and an acknowledged Mode (AM) to support various QoSs requested by each radio bearer (RB). Especially, for reliable data transmission, the AM RLC performs a function to retransmit data through an automatic repeat and request (ARQ).

A Packet Data Convergence Protocol (PDCP) layer is positioned in the second layer above the RLC layer. The PDCP layer is used to effectively transmit data using an IP packet, such as an IPv4 or IPv6, in a radio interval having a relatively small bandwidth. For this purpose, the PDCP layer reduces unnecessary control information via a function, such as header compression. The header compression by the PDCP layer serves to effectively transmit data in a radio interval by transmitting only information necessary in a header portion of data. In the LTE system, the PDCP layer also performs a security function. The security function includes a ciphering function for preventing data monitoring from a third party, and an integrity protection function for preventing data manipulation from a third party.

A radio resource control (RRC) layer located at a lowest portion of the third layer is defined in the control plane. The RRC layer handles logical channels, transport channels and physical channels for the configuration, re-configuration and release of radio bearers. Here, a radio bearer (RB) denotes a logical path provided by the first and second layers of radio protocols for data transfer between the mobile terminal and the UTRAN. Generally, configuration of the RB indicates to regulate radio protocol layers and channel characteristics necessary to provide a specific service, and to configure specific parameters and operation methods. The RB is divided into a signaling RB (SRB) and data RB (DRB). The SRB is used as a path through which an RRC message is transmitted on a C-plane, while the DRB is used as a path through which user data is transmitted on a U-plane.

Hereinafter, a PDCP entity will be explained in more detail.

As shown in FIG. 2, a PDCP entity is upwardly connected to an RRC layer or a user application, and is downwardly connected to an RLC layer.

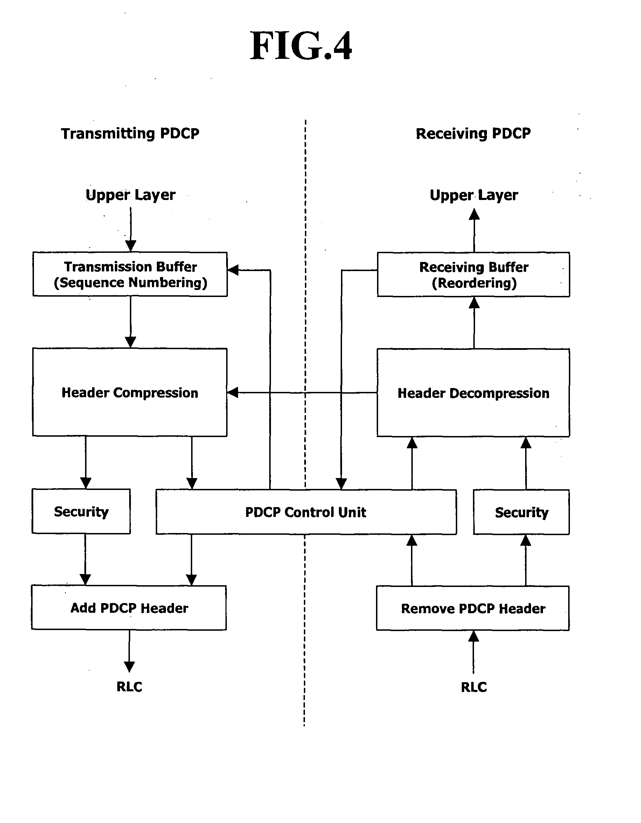

FIG. 4 illustrates a detailed structure of a PDCP entity. Illustrated blocks serving as function blocks may be differently implemented, actually.

Referring to FIG. 4, one PDCP entity is composed of a transmitting PDCP entity and a receiving PDCP entity. The left transmitting PDCP entity transmits, to a receiving PDCP entity (peer entity), SDU received from an upper layer or control information generated by itself after constructing into PDUs. And, the right receiving PDCP entity extracts PDCP SDU or control information from the PDCP PDU received from the transmitting PDCP entity.

As aforementioned, the PDUs generated by the transmitting PDCP entity include data PDUs and control PDUs. The data PDUs are data blocks formed by processing SDUs received from an upper layer by the PDCP, and control PDUs generated by the PDCP so as to transmit control information to a peer entity.

The data PDUs are generated by RBs of the User Plane and the Control Plane, and functions are selectively used according to used planes.

More concretely, a header compression function is applied to only U-plane data, and an Integrity Protection function of security functions is applied to C-plane data. The security functions include a Ciphering function for data security, as well as the Integrity Protection function. Here, the Ciphering function is applied to both U-plane and C-plane data.

The control PDU is generated only by U-plane RB. And, the control PDU includes a status report for informing a received status of PDCP buffers to a transmitting side, and a header compression (HC) feedback packet for informing a status of a header decompressor to a header compressor.

The status report is transmitted from a receiving PDCP entity to a transmitting PDCP entity. The receiving PDCP entity informs the transmitting PDCP entity of a received status of each PDCP SDU. This allows the transmitting PDCP entity not to re-transmit PDCP SDUs having already received by the receiving PDCP entity, but to re-transmit PDCP SDUs having not received by the receiving PDCP entity. The PDCP status report is transmitted in the form of a PDCP STATUS PDU.

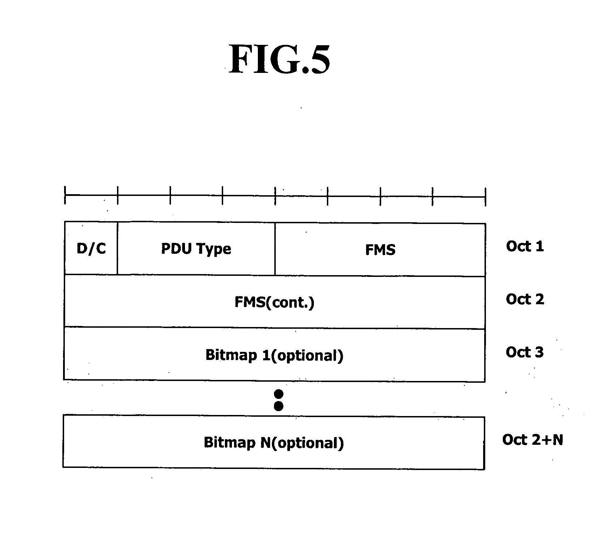

FIG. 5 illustrates a structure of a PDCP STATUS PDU.

Referring to FIG. 5, the PDCP STATUS PDU includes a 1-bit Data/Control (D/C) indicating whether a corresponding PDU is a data PDU or a control PDU, and a 3-bit PDU type indicating a type of a control PDU. Here, a PDU of'000'indicates a PDCP status report, a PDU of '001' indicates a header compression feedback information, and a PDU having a value rather than '000' and '001' indicates a reversed PDU.

Furthermore, the PDCP STATUS PDU includes a 12-bit First Missing SN (FMS) indicating a sequence number (SN) of a PDCP SDU having not firstly received by a receiving side, and a bit map of a variable length indicating whether a PDCP SDU satisfying a modulo 4096 has been successfully received. Here, a bit map field having a bit position of '0' indicates that a PDCP SDU has not been successfully received, whereas a bit map field having a bit position of '1' indicates that a PDCP SDU has been successfully received. And, the PDCP SDU SN is composed of the FMS and the bit position.

The PDCP status report is used at the time of performing handover procedures in an LTE system.

Firstly, a transmitting PDCP entity transmits PDCP SDUs provided from an upper layer, and then stores them in a transmission buffer for re-transmission that may be later required.

When handover procedures occur, the transmitting PDCP entity receives information whether a receiving PDCP entity has successfully received PDCP SDUs through a PDCP status report. Then, the transmitting PDCP entity re-transmits PDCP SDUs having not received by the receiving PDCP entity after the handover. Especially, an eNB is converted from a source to a target when handover procedures occur in a network. This causes changes of the PDCP entities, and thus re-transmission using a status report is absolutely required.

### [Disclosure]

### [Technical Solution]

In order to prevent data loss in the conventional art, re-transmission is performed by a PDCP layer in the occurrence of a handover, but is generally performed by an AM RLC. More concretely, re-transmission by a PDCP layer is allowed when a handover occurs, so as to prevent data loss that may occur when PDCP entities are replaced by others due to changes of a base station (eNB) at the time of the handover, for example. Accordingly, in the conventional art, transmitting a PDCP status report is allowed only when a handover occurs.

However, the conventional method has the following problems.

When an RLC internal error such as retransmission of an endless RLC occurs in a lower RLC layer of a PDCP, an RLC entity has to be re-established. Here, re-transmission of the PDCP may be required due to the following reason. Generally, a transmitting RLC entity and a receiving RLC entity are re-established in the occurrence of an RLC re-establishment. RLC PDUs being transmitted at a time point of the RLC re-establishment (outstanding RLC PDUs) can not be checked whether they have been successfully received by the receiving RLC entity.

That is, the PDCP entity can not check whether RLC PDUs being transmitted at a time point of the RLC re-establishment (outstanding RLC PDUs) have been successfully transmitted. Accordingly, the PDCP entity is required to retransmit PDCP SDUs having not been successfully transmitted after the RLC re-establishment.

Therefore, an object of the present invention is to provide a mobile communication system capable of reducing data loss due to an RLC re-establishment by transmitting a status report by a PDCP layer when an RLC re-establishment occurs, and a method for transmitting a PDCP status report thereof.

To achieve these and other advantages and in accordance with the purpose of the present invention, as embodied and broadly described herein, there is provided a method of transmitting a packet data convergence protocol (PDCP) status report, comprising: receiving, by a receiving PDCP entity, an indication that a layer 2 error requiring an RLC re-establishment has been detected; triggering a PDCP status report according to the RLC re-establishment; constructing the PDCP status report; and transmitting the constructed PDCP status report to a transmitting PDCP entity after the RLC re-establishment is completed.

Preferably, the receiving, triggering and transmitting steps are performed for radio bearers mapped on RLC AM.

Preferably, the indication is received from an upper layer.

Preferably, the indication is received from a lower layer.

Preferably, the layer 2 error comprises an RLC error.

Preferably, the layer 2 error is unrelated to handover procedures.

Preferably, the PDCP status report indicates which PDCP SDUs have been received or not.

Preferably, the PDCP status report is constructed after processing PDCP data PDUs having been received from an RLC due to the RLC re-establishment.

To achieve these and other advantages and in accordance with the purpose of the present invention, as embodied and broadly described herein, there is also provided a mobile communication system, comprising: a receiving PDCP entity configured to transmit a PDCP status report when receiving an indication that a layer 2 error requiring an RLC re-establishment has been detected; and a transmitting PDCP entity configured to retransmit PDCP SDUs having not been successfully received by the receiving PDCP entity based on the received PDCP status report.

Preferably, the receiving PDCP entity triggers a PDCP status report according to the RLC re-establishment when the layer 2 error has been detected, constructs the PDCP status report, and transmits the constructed PDCP status report to the transmitting PDCP entity after the RLC re-establishment is completed.

Preferably, the indication is received from an upper layer.

Preferably, the indication is received from a lower layer.

Preferably, the layer 2 error comprises an RLC error.

Preferably, the layer 2 error is unrelated to handover procedures.

Preferably, the PDCP status report indicates which PDCP SDUs have been successfully received or not.

Preferably, the PDCP status report is constructed after processing PDCP data PDUs having been received from an RLC due to the RLC re-establishment.

### [Advantageous Effect]

As aforementioned, when an RLC re-establishment occurs due to an RLC internal error, the receiving PDCP entity triggers a status report to transmit it to the transmitting PDCP entity even if PDCP entities are not replaced by new ones. The transmitting PDCP entity checks whether a received state of each PDCP SDU based on the triggered PDCP status report, and then re-transmits PDCP SDUs having not successfully transmitted. This prevents data loss in any cases.

### [Mode for Invention]

The present invention is applied to a mobile communication system, and particularly, to an evolved universal mobile telecommunications system (E-UMTS) evolved from the UMTS. However, the present invention may not be limited to the system, but applicable to any communication system and communication protocol complying with the scope of the present invention.

Hereinafter, a preferred embodiment of the present invention will be explained in more detail.

When an RLC internal error such as retransmission of an endless RLC occurs in a lower RLC layer of a PDCP, an RLC entity has to be re-established. Generally, a transmitting RLC entity and a receiving RLC entity are re-established in the occurrence of an RLC re-establishment. Accordingly, RLC PDUs being transmitted at a time point of the RLC re-establishment (outstanding RLC PDUs) may not be checked whether they have been successfully received by the receiving RLC entity, that is, data loss may occur.

Accordingly, it is required for a transmitting PDCP to re-transmit PDCP SDUs based on a status report transmitted from a receiving PDCP, in the occurrence of not only a handover but also an RLC re-establishment due to an RLC internal error.

A method for transmitting a PDCP status report of the present invention comprises: receiving, by a receiving PDCP entity, an indication that a layer 2 error requiring an RLC re-establishment has been detected; triggering a PDCP status report according to the RLC re-establishment; constructing the PDCP status report; and transmitting the constructed PDCP status report to a transmitting PDCP entity after the RLC re-establishment is completed.

The receiving, triggering and transmitting steps are performed for radio bearers mapped on RLC AM.

The indication is received from an upper layer.

The indication is received from a lower layer.

The layer 2 error comprises an RLC error.

The layer 2 error is unrelated to handover procedures.

The PDCP status report indicates which PDCP SDUs have been received or not.

The PDCP status report is constructed after processing PDCP data PDUs having been received from an RLC due to the RLC re-establishment.

In order to prevent data loss, when a lower RLC layer is re-established, a receiving PDCP entity transmits a status report to a transmitting PDCP entity even if PDCP entities are not replaced by others. The transmitting PDCP entity checks whether a received state of each PDCP SDU based on the received PDCP status report, and then re-transmits PDCP SDUs having not successfully transmitted.

To this end, the PDCP layer and the RLC layer perform the following operations.

The RLC continues to check whether an RLC re-establishment occurs due to internal errors such as retransmission of an endless RLC. In the occurrence of an RLC re-establishment, the RLC informs the situation to its upper layer (PDCP) and an upper layer of its peer RLC (peer PDCP).

The method for informing an RLC re-establishment to an upper layer of an RLC (PDCP) by the RLC may be implemented in various manners.

For instance, the RLC may directly inform an RLC re-establishment to its upper layer (PDCP), or may inform the RLC re-establishment to a control layer (RRC) such that the RRC informs the RLC re-establishment to the PDCP layer.

The method for informing an RLC re-establishment to an upper layer of its peer RLC (peer PDCP) by the RLC may be also implemented in various manners.

For instance, once the RLC informs an RLC re-establishment to its peer RLC through a RESET PDU, etc., the peer RLC informs the RLC re-establishment to its upper layer (peer PDCP). The RLC may inform the RLC re-establishment to a control layer (RRC) such that the RRC informs the RLC re-establishment to its peer RRC, and then the peer RRC informs the RLC re-establishment to a peer PDCP.

Among PDCP entities having received the RLC re-establishment report, a receiving PDCP entity transmits a PDCP status report to a transmitting PDCP entity to inform its reception status. Then, the transmitting PDCP entity having received the PDCP status report re-transmits PDCP SDUs having not transmitted to the receiving PDCP entity after the RLC re-establishment.

More concretely, once the PDCP entities are informed of an RLC re-establishment from the RLC or RRC, the receiving PDCP entity checks a status of its reception buffer, and transmits a PDCP status report to the transmitting PDCP entity.

For a precise PDCP status report, the receiving PDCP entity has to check a status of its reception buffer even with consideration of PDCP SDUs having been transmitted to the PDCP entities due to the RLC re-establishment. Generally, the RLC transmits RLC SDUs to the PDCP entities in sequence. However, in the occurrence of an RLC re-establishment, the RLC may transmit successfully received RLC SDUs to the PDCP entities out-of-sequence. Accordingly, the receiving PDCP entity may check whether PDCP SDUs have been successfully received by performing a header decompression with respect to PDCP PDUs.

Once receiving the PDCP status report from the receiving PDCP entity, the transmitting PDCP entity precisely checks which PDCP SDUs have not been successfully transmitted. Then, the transmitting PDCP entity re-transmits the PDCP SDUs having failed in reception after the RLC re-establishment.

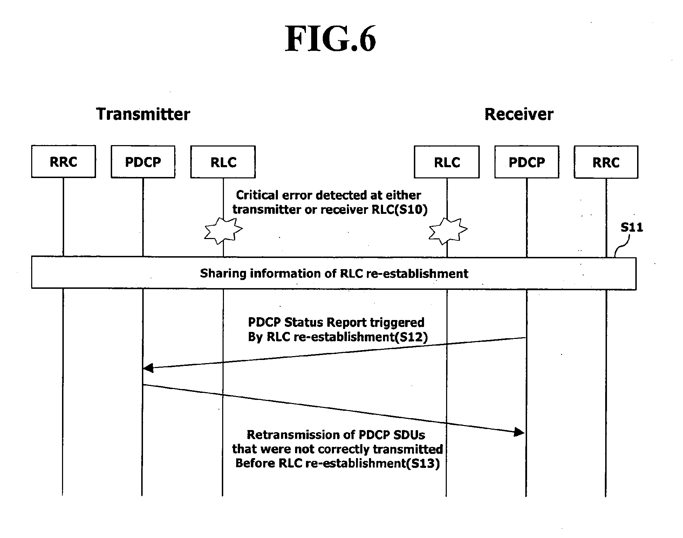

FIG. 6 is a flowchart showing a method for transmitting a status report in a mobile communication system according to a preferred embodiment of the present invention.

Referring to FIG. 6, a transmitting RLC entity or a receiving RLC entity continues to check the occurrence of an RLC re-establishment (S10). If the RLC re-establishment has been detected, the RLC performs to share RLC re-establishment information (S11).

The sharing of the RLC re-establishment information may be executed as the RLC directly informs the RLC re-establishment to the PDCP, or as the RLC informs the RLC-establishment to a control layer (RRC) such that the RRC informs the RLC re-establishment to the PDCP.

Alternatively, the sharing of the RLC re-establishment information may be executed as the RLC directly informs the RLC re-establishment to its peer RLC through a RESET PDU, etc., and then the peer RLC informs the RLC re-establishment to its upper layer (peer PDCP). Here, the RLC may inform the RLC re-establishment to a control layer (RRC) such that the RRC informs the RLC re-establishment to its peer RRC, and then the peer RRC informs the RLC re-establishment to a peer PDCP.

Once the RLC re-establishment information is shared, the receiving PDCP entity informs its reception status by transmitting a PDCP status report triggered by the RLC re-establishment to the transmitting PDCP entity (S12).

The transmitting PDCP entity having received the PDCP status report precisely checks which PDCP SDUs have been successfully transmitted and which PDCP SDUs have been unsuccessfully transmitted, and then re-transmits PDCP SDUs having failed in reception (S13).

It was explained that the present invention was applied in the occurrence of an RLC re-establishment due to an RLC internal error. However, the present invention may be also applied when internal errors of layers 1 and 2 occur.

Meanwhile, the method according to the present invention, as described so far, can be implemented by hardware or software, or any combination thereof. For example, the method according to the present invention may be stored in a storage medium (e.g., an internal memory of a mobile terminal, a flash memory, a hard disc, etc.). Alternatively, the method according to the present invention can be implemented as codes or command words within a software program capable of being executed by a processor (e.g., a microprocessor in a mobile terminal).

The present invention has been explained with reference to the embodiments which are merely exemplary. It will be apparent to those skilled in the art that various modifications and equivalent other embodiments can be made in the present invention without departing from the spirit or scope of the invention. Also, it will be understood that the present invention can be implemented by selectively combining the aforementioned embodiment(s) entirely or partially. Thus, it is intended that the present invention cover modifications and variations of this invention provided they come within the scope of the appended claims and their equivalents.

### [Description of Drawings]

FIG. 1 illustrates a network structure of a Long Term Evolution (LTE) system, a mobile communication system to which to the related art and the present invention are applied;
FIG. 2 illustrates each layer of a control plane of a radio protocol;
FIG. 3 illustrates each layer of a user plane of a radio protocol;
FIG. 4 illustrates a detailed structure of a PDCP entity;
FIG. 5 illustrates a structure of a PDCP STATUS PDU; and
FIG. 6 is a flowchart showing a method for transmitting a status report in a mobile communication system according to a preferred embodiment of the present invention.

## Claims

1. A method of transmitting a packet data convergence protocol (PDCP) status report from a receiving PDCP entity to a transmitting PDCP entity, comprising:
receiving an indication that a layer 2 error is detected, the detected layer 2 error requiring RLC re-establishment;
triggering a PDCP status report according to the RLC re-establishment being performed;
constructing the PDCP status report; and
transmitting the constructed PDCP status report to the transmitting PDCP entity after the RLC re-establishment is completed.

2. The method of claim 1, wherein the receiving, triggering and transmitting steps are performed for radio bearers mapped on RLC AM.

3. The method of claim 1, wherein the indication is received from an upper layer.

4. The method of claim 1, wherein the indication is received from a lower layer.

5. The method of claim 1, wherein the layer 2 error comprises an RLC error.

6. The method of claim 1, wherein the layer 2 error is unrelated to handover procedures.

7. The method of claim 1, wherein the PDCP status report indicates which PDCP SDUs have been received or not.

8. The method of claim 1, wherein the PDCP status report is constructed after processing PDCP data PDUs having been received from an RLC due to the RLC re-establishment.

9. A mobile communication system comprising:
a receiving packet data convergence protocol (PDCP) entity configured to transmit a PDCP status report when receiving an indication that a layer 2 error is detected, the detected layer 2 error requiring RLC re-establishment; and
a transmitting PDCP entity configured to retransmit PDCP SDUs which the successful delivery has not been confirmed by a PDCP status report.

10. The system of claim 9, wherein the receiving PDCP entity triggers a PDCP status report according to the RLC re-establishment when the layer 2 error has been detected, constructs the PDCP status report, and transmits the constructed PDCP status report to the transmitting PDCP entity after the RLC re-establishment is completed.

11. The system of claim 9, wherein the indication is received from an upper layer.

12. The system of claim 9, wherein the indication is received from a lower layer.

13. The system of claim 9, wherein the layer 2 error comprises an RLC error.

14. The system of claim 9, wherein the layer 2 error is unrelated to handover procedures.

15. The system of claim 9, wherein the PDCP status report indicates which PDCP SDUs have been received or not.

16. The system of claim 10, wherein the PDCP status report is constructed after processing PDCP data PDUs are received from an RLC due to the RLC re-establishment.
